# EUROPEAN PATENT APPLICATION

(11) **EP 0 882 908 A2**
(43) Date of publication of application: **09.12.1998**
(21) Application number: 98303302.8
(22) Date of filing: 28.04.1998
(51) Int. Cl.: F16H 3/091

(54) **Multiple speed ratio manual transmission for motor vehicles**

(30) Priority: 05.06.1997 US 870052
(71) Applicant: Ford Global Technologies, Inc., Dearborn, Michigan 48126 (US)
(72) Inventor: Meisner, Steven, Canton, Michigan 48187 (US)
(74) Representative: Messulam, Alec Moses

(57) **Abstract**

A manual transmission for motor vehicles includes a main shaft (16), aligned with an input shaft (10) and output shaft (18), and a counter shaft (32) parallel to the other shafts. The main shaft carries pinions (36,40,42,58), which are free to rotate with respect to the main shaft, and synchronizers (70,80,96), which connect the pinions to the main shaft. The input shaft and main shaft are driveably fixed, and the output shaft is connected by a synchronizer (96) directly to the main shaft. A final drive gear-pinion pair (52,56) produces a speed reduction between the countershaft and output shaft.

## Description

This invention pertains to the gear arrangement for an automotive vehicle transmission, especially to such a transmission of the type wherein the input and output shafts are coaxial and a countershaft is arranged parallel to the other shafts.

When the engine of a motor vehicle is idling and the neutral clutch that connects the engine to a manual transmission is disengaged, the speed of the engine varies as a result of cyclic irregularity intrinsic in the operation of an internal combustion engine. Countershaft manual transmissions for automotive use contain gear sets whose members are in continuous meshing engagement, though the gear selector of the transmission is in the neutral position. When the neutral clutch is engaged and the gear selector is in the neutral position, speed changes of the engine transmitted to the gearset produce noise called "neutral rollover gear rattle." When the engaged gear teeth change position with respect to each other due to engine speed variations, the teeth of the driven gear contact alternately the driving face and the non-driving face of the driving pinion.

To reduce or eliminate this objectionable noise, various devices have been employed to take up clearances between the faces of the gear and mating pinion. These devices include a wheel coaxially arranged with the gear having similar teeth to those of the gear, and means for elastically maintaining the teeth of the gear in position that is angularly offset relative to the gear. A mechanical spring, usually a helical spring, located radially offset from the axis of the gear, applies a force directed tangentially to the axis tending to rotate the angular element with respect to the gear wheel. Other means such as elastomeric material have been used in the prior art to bias an angular member angularly with respect to a gear to maintain contact between the gear teeth in order to avoid gear rattle.

U.S. Patent 4,718,295 describes use of a one-way clutch located on the input shaft between a gear wheel and a cylindrical surface of the shaft. The one-way clutch permits a one-way drive connection so that power can be transmitted through the clutch from the input shaft to either of two countershafts when fourth and fifth gear ratios are selected by the vehicle operator.

U.S. Patents 4,094,206 to Sogo et al and 4,817,470 to Müller et al describe countershaft transmissions. In each of these patents, the countershaft is continually driven by the input shaft, resulting in high shift efforts and a limited gear selection.

It is usually an object in the design of a manual transmission to minimize the effort required to make gear ratio changes, i.e., to reduce as much as possible the magnitude of force that must be applied to a shift mechanism to disengage a current gear ratio and to engage a new gear ratio. The magnitude of that force is to a great extent determined by the magnitude of inertia of rotating components that is reflected from the main shaft to the input shaft.

It is an object of the present invention to minimize the effort required to make gear ratio changes in a transmission.

According to the present invention, there is provided a multiple speed transmission for producing a range of forward drive speed ratios, comprising: an input shaft adapted for driveable connection to a power source; an output shaft substantially coaxial with the input shaft, adapted for connection to a load; a rotatably supported main shaft substantially coaxial with the input shaft, driveably fixed to the input shaft; a rotatably supported counter shaft disposed substantially parallel to the main shaft; multiple pairs of gears and pinions, a first member of each pair supported on the counter shaft, a second member of each pair rotatably supported on the main shaft; final drive gearing including a pinion fixed to the counter shaft, and a gear meshing with said pinion, fixed to the output shaft; means for releasably connecting a member of each pinion-gear pair to the main shaft and for releasably connecting said final drive gear to the main shaft.

In the transmission embodying the present invention, the pinions that are driveably connected to the main shaft and input shaft by various synchronizers, supported rotatably on the main shaft by bearings and are continuously engaged with corresponding gears supported on the countershaft. However, because the countershaft is continually connected only to the output shaft and not to the main shaft, when the synchronizers are in the neutral position, the countershaft does not reflect inertia to the input shaft. Instead that inertia is reflected only to the output shaft. This arrangement reduces the amount of inertia required to move the synchronizer clutch sleeves into engagement with blocker rings associated with the gear ratio to which the gear shift is being made.

An advantage of the transmission embodying the present invention is that neutral rollover is eliminated because no gears are rotating when the transmission synchronizers are in the neutral position. There is no driveable connection between the main shaft, countershaft, pinions or gears; instead, the pinions and gears are driveably connected to the output shaft.

Another advantage of the transmission embodying the present invention is that the synchronizers, including their respective blocker rings and clutch sleeves, can all have the same size for each of the gear ratios and because the reflected inertia is the same for each gear ratio because the gears and pinions associated with each gear ratio are disconnected from the input shaft.

Still another advantage of the transmission embodying the invention is that the widths of the pinions and gears, which are in continuous meshing engagement and associated with each of the speed ratios, can be lower than in conventional transmissions because they transmit lower torque magnitudes. In the present invention, the final gear reduction is located at the rearward end of the gearset close to the output shaft. Accordingly, the pinion and gear pairs carry only torque produced by the engine without multiplication. In a conventional transmission the pinion and gears associated with reverse drive and the lower forward speed ratios are required to transmit engine torque amplified by torque multiplication produced by a speed reduction gearset located between the engine shaft and the pinion-gear pairs.

In the transmission embodying the present invention, because there is direct drive in the fifth speed ratio between the input shaft, and the output shaft the possibility of overheating transmission fluid while running for long periods at high speed in the fifth gear ratio is virtually eliminated.

The invention will now be described, by way of example, with reference to the accompanying drawings, in which:
Figure 1 is a cross sectional view showing the gear arrangement of a manual transmission according to my invention; and
Figures 2-9 are stick diagrams of several gear arrangements according to my invention.

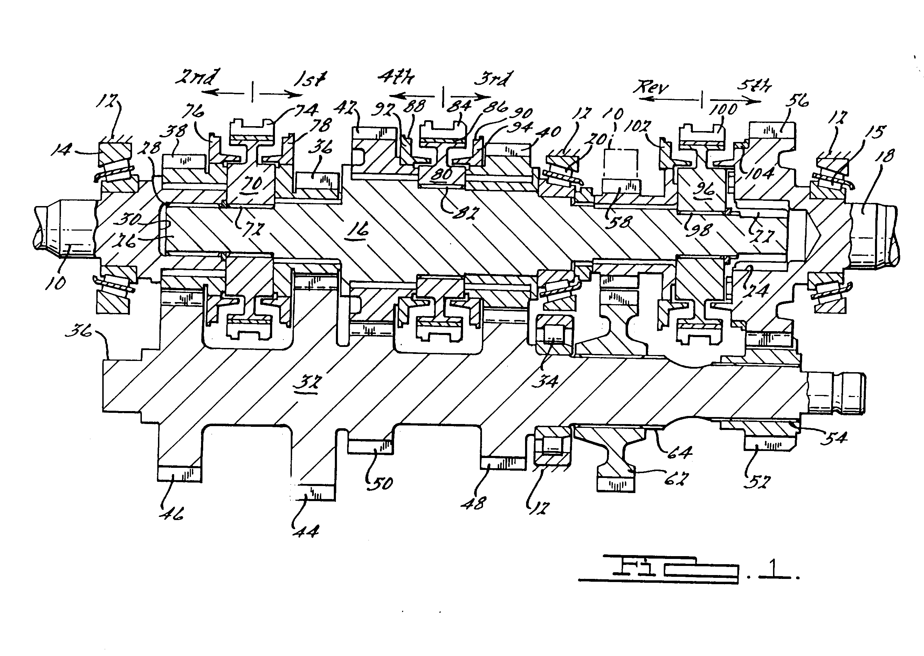

As shown in Figure 1, an input shaft 10, adapted for driveable connection through a manually operated on/off clutch (not shown) to a power source such as an internal combustion engine, is supported rotatably on the transmission casing 12 by roller thrust bearing 14. A main shaft 16, aligned with the axis of the input shaft and output shaft 18, is rotatably supported on a transmission casing by roller thrust bearing 20 and by a bearing 22 located in a pocket 24 at the forward end of the output shaft, Roller thrust bearing 15 rotatably supports the output shaft on the transmission casing.

The main shaft 16 carries an external spline 26 located at the forward end of the main shaft, which spline engages an internal spline 28 formed on a cylindrical surface of recess 30 located at the rearward end of input shaft 10.

A counter shaft 32, aligned substantially parallel to the axes of the input shaft, main shaft and output shaft, is supported rotatably on the transmission casing by a bearing 34 and a second bearing located between the transmission casing and a shoulder 36 located at the forward end of the countershaft.

Input shaft 10 and main shaft 16 support the pinions 36, 38, 40, 42 of the pinion-gear pairs, each pair associated with one of the four lowest forward speed ratios. The countershaft rotatably supports the corresponding gears 44, 46, 48, 50 of the pinion-gear pairs. Pinions 36, 40 and 42 are journalled on the outer surface of main shaft 16 or supported on bearings on the main shaft. Pinion 38 is journalled on the outer surface of output shaft 18 or is supported on a roller bearing on the outer surface of the input shaft. Gears 44, 46, 48 and 50 are either machined integrally with the countershaft or are machined separately and then fixed to the countershaft against relative rotation and displacement.

A final drive pinion 52 is shown driveably connected by a spline 54 to the countershaft at the rearward end of the countershaft. Alternatively, pinion 52 could be machined integrally with the countershaft. A final drive gear 56 meshing with pinion 52 is machined integrally with the output shaft or is mechanically connected to shaft 18 at a position at the forward end of the output shaft.

In a preferred embodiment, one of the final drive gear 56 and final drive pinion 52 is supported by one-way clutch (not shown), so the countershaft 32 is drivably disconnected from the output shaft 18 during direct drive and therefore does not rotate therewith during direct drive. Furthermore, as is appreciated by one skilled in the art, a preferred one-way clutch only drivably disengages the countershaft during direct drive but is drivably engaged during all other gear ratios so engine braking may occur in the other drive ratios.

The reverse drive pinion 58, journalled on the outer surface of main shaft 16 or supported rotatably by a roller bearing on the main shaft, is in continuous meshing engagement with a reverse idler 60, rotatably supported on a stub shaft (not shown). Idler 60 meshes with reverse gear 62, which is shown splined at 64 to countershaft 62 but can be machined integrally with the countershaft.

A first speed and second speed synchronizer 70 located between the first speed ratio pinion 36 and the second speed ratio pinion 38 is splined at 72 to main shaft 16. In the conventional manner, synchronizer 70 includes a clutch sleeve 74, moveable by a shift mechanism forward and rearward from the position shown in the figure along the axis of the main shaft into clutching engagement with blocker rings 76, 78, which are driveably connected to pinions 38 and 36, respectively.

Similarly, a 3-4 synchronizer 80 is located between the third speed pinion 40 and fourth speed pinion 42. Synchronizer 80 includes a hub splined at 82 to the outer surface of main shaft 16 and a clutch sleeve 84, slideably mounted by internal spline teeth 86 formed on its inside diameter and adapted to driveably engaged blocking teeth 88, 90 formed on the outer surface of blocker rings 92, 94, which are driveably connected to pinions 42 and 44, respectively.

A third synchroniser 96, located between reverse pinion 58 and final drive gear 56, is splined at 98 to the outer surface of main shaft 16. Synchronizer 96 includes a clutch sleeve 100 adapted to move forward and rearward along the axis of the main shaft into driveable engagement with blocking teeth formed on blocker rings 102, 104, which are driveably connected to reverse pinion 58 and gear 56.

In a preferred embodiment, the synchronizers 70, 80, and 96 are dimensionally similar so the parts are interchangeable. Dimensionally similar as used herein indicates the nominal dimensions of each are identical but manufacturing variances produce some differences therein.

To produce the first drive forward ratio, sleeve 74 of synchronizer 70 is moved rearward, thereby connecting first speed pinion 36 to the main shaft. The torque delivery path for the first speed ratio includes input shaft 10, main shaft 16, synchronizer 70, pinion 36, gear 44, countershaft 32, final drive pinion 52, final drive gear 56 and output shaft 18.

The second forward speed ratio results when synchronizer sleeve 74 is moved forward into engagement with blocker ring 76, thereby driveably connecting second speed pinion 38 to main shaft 16. The torque delivery path includes input shaft 10, main shaft 16, synchronizer 70, pinion 38, gear 46, countershaft 32, pinion 52, gear 56 and output shaft 18.

To produce the third forward speed ratio, the clutch sleeves 74, 100 of synchronizers 70 and 96 are in the neutral positions disengaged from the adjacent blocker ring, but synchronizer sleeve 84 is moved rearward into engagement with blocking teeth 90 on ring 94, thereby driving the connecting third forward speed pinion 40 to main shaft 16. The torque delivery path includes input shaft 10, main shaft 16, synchronizer 80, pinion 40, gear 48, countershaft 32, pinion 52, gear 56 and shaft 18.

The fourth forward speed ratio results when clutch sleeve 84 is moved forward into engagement with the teeth of blocker ring 92, thereby driveably connecting the fourth speed ratio pinion 42 to main shaft 16. The torque delivery path includes input shaft 10, main shaft 16, synchronizer 80, pinion 42, gear 50, countershaft 32, pinion 52, gear 56 and shaft 18.

To produce the fifth forward speed ratio, the clutch sleeves 74, 84 of synchronizers 70 and 80 are located in the neutral positions disengaged from the adjacent blocker rings, and clutch sleeve 100 is moved rearward into engagement with the teeth of blocker ring 104, thereby driveably connecting output shaft 18 to main shaft 16. The torque delivery path includes input shaft 10, main shaft 16, synchronizer 96, and output shaft 18.

To produce the reverse drive ratio, sleeve 100 of synchronizer 96 is moved forward into engagement with the teeth of blocker ring 102, thereby driveably connecting reverse pinion 58 to main shaft 16. The torque delivery path includes input shaft 10, main shaft 16, synchronizer 96, pinion 58, reverse idler 60, reverse gear 62, final drive pinion 52, final drive gear 56 and output shaft 18.

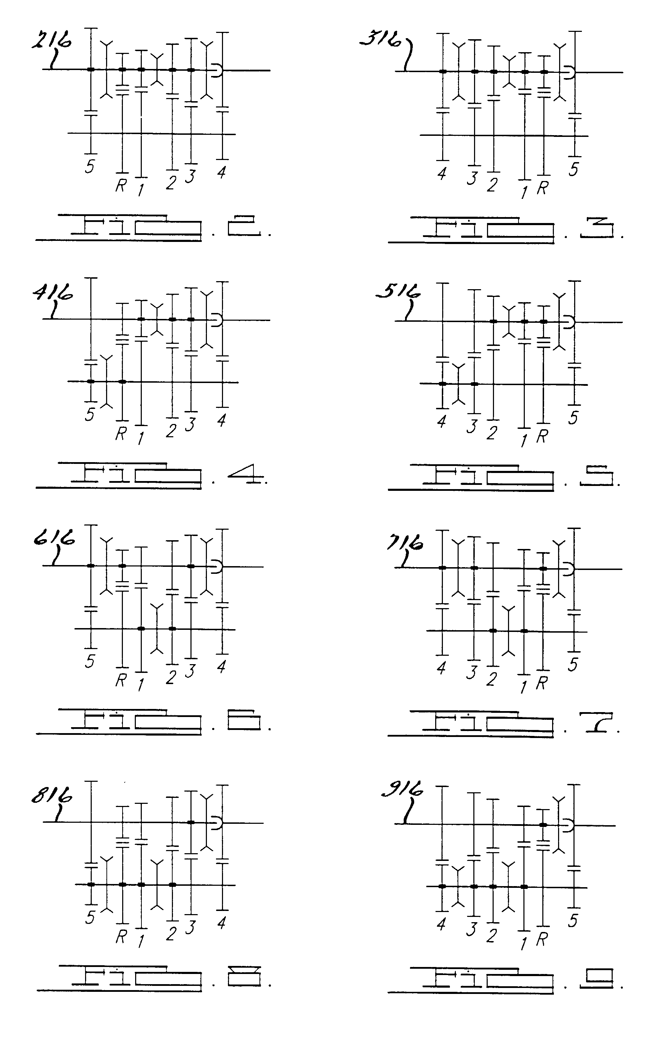

Figures 2, 4, 6, and 8 illustrate arrangements having a direct drive fourth gear ratio. Because the arrangement in Figure 1 was described in detail, the arrangements of Figures 2-9 are not described in detail. In each of figures 2-9, similar elements are designated numerically as in Figure 1, but preceded with the figure number (for example, the mainshaft 70 of figure 1 is depicted as mainshaft 270 in figure 2). Figures 3, 5, 7, and 9 illustrate a direct drive fifth gear ratio. Figures 2 and 3 illustrate preferred embodiments wherein all synchronizers are carried by the main shaft. Figure 3 is essentially the arrangement of Figure 1, but the synchronizers and gear pairs for 1, 2, 3, and 4 gears are repositioned on the main shaft and countershaft. Figures 7 and 9 illustrate alternative preferred embodiments wherein the forward synchronizers are carried by the countershaft and the reverse/direct synchronizer is carried by the main shaft. One skilled in the art recognizes that the gears carried by the mainshaft of in Figures 2-9 could alternatively be carried by the input shaft. Figures 4-7 illustrate further preferred embodiments.

## Claims

1. A multiple speed transmission for producing a range of forward drive speed ratios, comprising:
an input shaft (10) adapted for driveable connection to a power source;
an output shaft (18) substantially coaxial with the input shaft (10), adapted for connection to a load;
a rotatably supported main shaft (16) substantially coaxial with the input shaft (10), driveably fixed to the input shaft;
a rotatably supported counter shaft (32) disposed substantially parallel to the main shaft (16);
multiple pairs of gears (44,46,48,50) and pinions (36,38,40,42), a first member of each pair supported on the counter shaft, a second member of each pair rotatably supported on the main shaft (16);
final drive gearing including a pinion (52) fixed to the counter shaft (32), and a gear (56) meshing with said pinion (52), fixed to the output shaft (18);
means (70,80,96) for releasably connecting a member of each pinion-gear pair to the main shaft (16) and for releasably connecting said final drive gear to the main shaft (16).

2. A transmission as claimed in claim 1, wherein the main shaft (16) is drivably disconnected from the countershaft (32) when the transmission is in a neutral state.

3. A transmission as claimed in claim 1, wherein:
a pinion (36) of a first pinion-gear pair is supported on the input shaft (10) for rotation relative thereto, said pinion (36) meshing with a gear (44) of said first pinion-gear pair, said gear (44) fixed to the counter shaft (32); and
the connecting means releasably connects said pinion (36) to the main shaft (16).

4. A transmission as claimed in claim 1, wherein the connecting means comprises:
a first synchroniser means (70) carried on the main shaft (16), located between a pinion (36) of a first pinion-gear pair and a pinion (38) of a second pinion-gear pair, for connecting alternately the pinion of the first and second pinion-gear pairs to the main shaft (16);
a second synchroniser means (80) carried on the main shaft (16), located between a pinion (40) of a third pinion-gear pair and a pinion (42) of a fourth pinion-gear pair, for connecting alternately the pinion of the third and fourth pinion-gear pairs to the main shaft (16); and
a third synchroniser means (96) carried on the main shaft (16), located between a pinion (58) of a fifth pinion-gear pair and the final drive gear (56), for connecting alternately the pinion of the fifth pinion-gear pair and the final drive gear to the main shaft (16).

5. A transmission as claimed in claim 4, wherein the first, second, and third synchronizer means are dimensionally similar.

6. A transmission as claimed in claim 1, wherein the connecting means comprises:
a first synchroniser means (70) carried on the main shaft (16), located between a pinion (36) of a first pinion-gear pair and a pinion (38) of a second pinion-gear pair, for connecting alternately the pinion of the first and second pinion-gear pairs to the main shaft (16);
a second synchroniser means (80) carried on the main shaft (16), located between a pinion (40) of a third pinion-gear pair and a pinion (42) of a fourth pinion-gear pair, for connecting alternately the pinion of the third and fourth pinion-gear pairs to the main shaft (16); and
a third synchroniser means (96) carried on the main shaft (16), located between a pinion (58) of a fifth pinion-gear pair and the output shaft (18), for connecting alternately the pinion of the fifth pinion-gear pair and the output shaft to the main shaft (16).

7. A transmission as claimed in claim 1, wherein the connecting means comprises:
a first synchroniser means (70) carried on the main shaft (16), located between a pinion (36) of first pinion-gear pair and a pinion (38) of a second pinion-gear pair, for connecting alternately the pinion of the first and second pinion-gear pairs to the main shaft (16);
a second synchroniser means (80) carried on the main shaft (16), located between a pinion (40) of a third pinion-gear pair and the final drive gear (56), for connecting alternately the pinion of the third pinion-gear pair and the final drive gear to the main shaft (16).

8. A transmission as claimed in claim 1, wherein the connecting means comprises:
a first synchroniser means (70) carried on the main shaft, located between a pinion (36) of a first pinion-gear pair and a pinion (38) of a second pinion-gear pair, for connecting alternately the pinion of the first and second pinion-gear pairs to the main shaft (16);
a second synchroniser means (80) carried on the main shaft, located between a pinion (40) of a third pinion-gear pair and the output shaft (18), for connecting alternately the pinion of the third pinion-gear pair and the output shaft to the main shaft (16).

9. A multiple speed transmission for producing a range of forward drive speed ratios, comprising:
an input shaft (10) adapted for driveable connection to a power source;
an output shaft (18) substantially coaxial with the input shaft (10), adapted for connection to a load; a rotatably supported main shaft (16) substantially coaxial with the input shaft (10) , driveably fixed to the input shaft;
a rotatably supported counter shaft (32) disposed substantially parallel to the main shaft (16);
multiple pairs of gears (44,46,48,50) and pinions (36,38,40,42), a gear of each pair fixed to the counter shaft for rotation therewith, a pinion of each pair supported on the main shaft for rotation relative to the main shaft (16);
final drive gearing including a pinion (52) fixed to the counter shaft (32), and a gear (56) meshing with said pinion (52), fixed to the output shaft (18);
means (70,80,96) supported rotatably on the main shaft, for releasably connecting the pinion of each pinion-gear pair to the main shaft (16) and for releasably connecting said final drive gear to the main shaft (16).

10. A transmission as claimed in claim 9, wherein the main shaft (16) is drivably disconnected from the countershaft (32) when the transmission is in a neutral state.
